# FASCICULE DE BREVET EUROPEEN

(11) **EP 1 685 950 B1**
(45) Date de publication et mention de la délivrance du brevet: **13.08.2008**
(21) Numéro de dépôt: 05405043.0
(22) Date de dépôt: 28.01.2005
(51) Int. Cl.: B31B 1/54

(54) **Dispositif pour le maintien de pattes latérales de découpes de boîtes défilant au sein d'une plieuse-colleuse**
Halterungsvorrichtung für die Seitenlaschen von Schachtelzuschnitten in einer Falt- und Zusammenklebmaschine
Device for holding the side flaps of a box-blank in a folder-gluer

(43) Date de publication de la demande: 02.08.2006
(73) Titulaire: BOBST S.A., 1001 Lausanne (CH)
(72) Inventeur: Coullery, Gérard, 1040 Villars-le-Terroir (CH); Dumusc, Pascal, 1895 Vionnaz (CH); Bourgeois, Sacha, 1030 Bussigny-près-Lausanne (CH)
(74) Mandataire: Poirier, Jean-Michel Serge

(56) Documents cités:
- EP-A- 0 481 580
- CH-A- 457 114

## Description

La présente invention a pour objet un dispositif pour le maintien de pattes latérales de découpes de boîtes en défilement au sein d'une plieuse-colleuse, machine communément employée dans l'industrie de l'emballage pour la confection de boîtes à partir de découpes en carton.

Une telle machine comprend généralement une suite de modules, chacun destiné à réaliser une opération déterminée de façon à ce que les découpes de boîtes, introduites à l'entrée de la machine dans un margeur, ressortent sous la forme de boîtes pliées prêtes à l'emploi. Typiquement, les opérations réalisées dans une plieuse-colleuse sont: le précassage de certaines lignes de pliage de la découpe, le pliage de parties telles que les pattes latérales, le pliage des pattes avant et arrière, l'encollage des pattes de collage, le pressage des découpes une fois pliées et collées, et leur réception en fin de ligne de production.

Le convoyage des découpes de boîtes dans les différents modules de la machine est généralement assuré par un transporteur à courroie qui, par friction, saisi les découpes, soit entre des courroies inférieures et supérieures, soit entre des courroies inférieures et des galets presseurs supérieurs.

C'est dans le module réalisant le pliage des pattes arrière que le dispositif de la présente invention trouve son utilisation. Le pliage des pattes arrière est une opération relativement complexe qui est effectuée au moyen d'un ou de plusieurs plieurs rotatifs à axe horizontal. Ces plieurs sont généralement constitués de deux crochets, montés en opposition sur un moyeu central, déplaçables le long d'un arbre d'entraînement agencé transversalement au sens de déplacement des découpes. Dans un mouvement synchronisé avec la cadence de défilement de ces dernières, ces crochets émergent tour à tour du plan de passage des découpes, dans l'espace séparant deux découpes consécutives. Chaque crochet est momentanément animé d'une vitesse supérieure à celle du défilement des découpes de sorte à pouvoir, à un instant donné, rattraper la patte arrière de la découpe jusqu'à la replier complètement sur la partie arrière de l'ébauche de boîte.

Afin de pouvoir réaliser cette opération de pliage, il est généralement nécessaire d'interrompre les courroies ou galets du transporteur supérieur qui maintiennent les parties latérales déjà pliées, en appui contre le transporteur inférieur. Sans l'action du transporteur supérieur, ces pattes latérales ont tendance à s'ouvrir. Cet effet est d'autant plus marqué lorsque intervient le pliage de la patte arrière durant lequel l'arrière de la découpe est prédisposée à être soulevée par le plieur rotatif.

Afin d'empêcher le déploiement des pattes latérales ou le soulèvement de la découpe au moment du pliage de la patte arrière, il est connu de recourir à des appuis rotatifs. De tels appuis sont décrit dans le brevet CH 457'114, décrivant un dispositif similaire. Ces appuis sont constitués de deux lames ou ailettes souples, diamétralement opposées et montées en rotation continue autour d'un arbre d'entraînement de manière à former une hélice. La vitesse de rotation de cet arbre est directement fonction de la vitesse de défilement des découpes dans la machine. Pour ce faire, l'arbre d'entraînement est lié mécaniquement par une chaîne cinématique, soit à l'entraînement des crochets rotatifs, soit à l'entraînement principal de la plieuse-colleuse ou encore à un margeur dit "à temps" de sorte qu'il soit toujours en parfait synchronisme avec la vitesse de défilement des découpes dans la machine.

Un margeur à temps est un ensemble mécanique qui permet de synchroniser le départ des découpes au moyen de taquets pousseurs montés sur des courroies crantées. Ce margeur est dit "à temps" en raison de sa fonction permettant de rattraper un éventuel retard de la boîte résultant d'un glissement involontaire sur le transporteur.

Le principal inconvénient d'un tel dispositif de maintien des pattes latérales réside dans le fait que son fonctionnement est totalement dépendant de son système d'entraînement. Cette dépendance empêche toute temporisation de l'entrée en action des appuis rotatifs par rapport au pliage de la patte arrière par le crochet rotatif. Or, il se trouve que, selon le type de boîte confectionnée, les pattes latérales ne sont pas toujours positionnées à la même distance de la patte arrière. Dans pareil cas, le maintien des parties latérales pliées de la boîte n'est pas toujours réalisé au moment le plus opportun.

Suivant un autre dispositif connu de l'homme du métier, les appuis ne sont pas montés sur un axe en rotation continue, mais sur le battant d'une articulation permettant un mouvement de va-et-vient de l'appui. Ce dernier passe d'une position à une autre au moyen d'un ressort de rappel par exemple. Le principal inconvénient d'un tel système réside dans le fait que le mécanisme n'est pas assez rapide et fiable pour tenir des cadences de production élevées.

Une autre solution consisterait à prévoir, dans l'entraînement des appuis rotatifs, une came mécanique permettant d'opérer un retard ou une avance prédéfinie de l'action des appuis rotatifs en fonction des boîtes à travailler. Une telle solution souffre cependant d'un inconvénient majeur lié au fait qu'il deviendrait nécessaire de prévoir autant de cames particulières qu'il y a de types de boîtes à travailler. Economiquement, cette solution n'est bien sûr pas envisageable.

Le but de la présente invention vise à remédier, au moins en partie, aux inconvénients précités en fournissant un dispositif indépendant qui soit à la fois simple et peu onéreux, tout en offrant une souplesse de travail autant dans son agencement au sein de la plieuse-colleuse que dans son fonctionnement amélioré par de nouvelles possibilités.

A cet effet, la présente invention a pour objet un dispositif pour le maintien des pattes latérales de découpes de boîtes, conformément à ce qu'énonce la revendication 1.

L'invention sera mieux comprise à l'étude d'un mode de réalisation pris à titre nullement limitatif et illustré par les figures annexées dans lesquelles:
Les figures 1a et 1b sont des représentations schématiques, respectivement d'un exemple de découpe non pliée et de la découpe partiellement pliée et collée.
La figure 2 donne une illustration schématique d'une plieuse-colleuse et de ses modules en regard desquels figure une illustration de certaines opérations correspondantes pouvant être utiles à la compréhension de l'invention.
La figure 3 est une vue schématique en perspective du dispositif de la présente invention.

Afin d'éviter toute confusion éventuelle dans la description qui va suivre, on définira les termes avant et arrière en référence au sens de déplacement des découpes dans la plieuse-colleuse. Ce sens est illustré dans les figures par une flèche D. De même, les adjectifs latéral et longitudinal se réfèrent également à cette même flèche, laquelle indique également la direction de l'axe longitudinal de la machine.

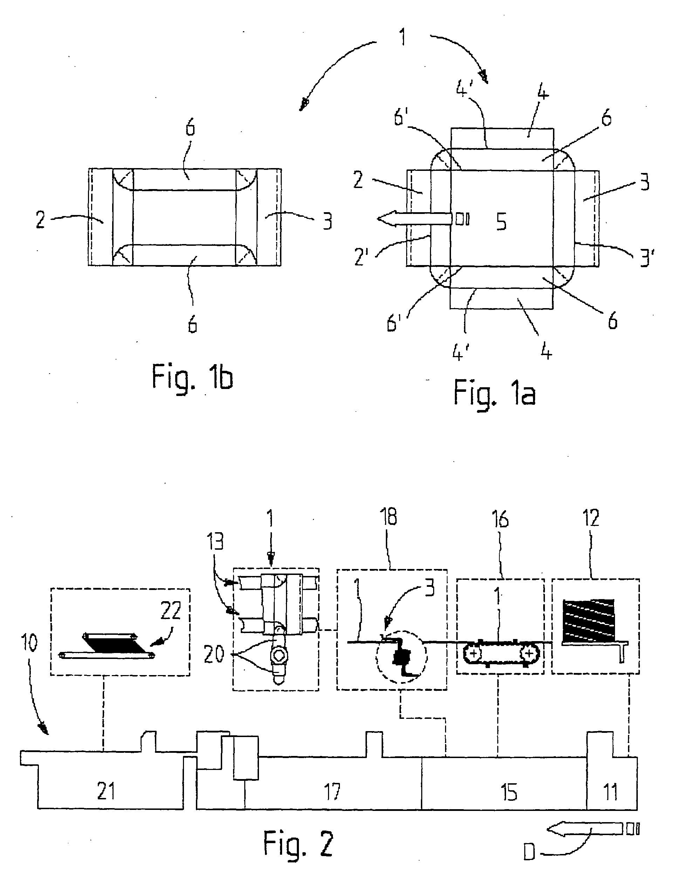

La figure 1a illustre un exemple de découpe 1 de boîte sous une forme développée, telle qu'elle se présente à l'entrée de la plieuse-colleuse. Cette découpe est formée de différentes parties parmi lesquelles on citera la patte avant 2, la patte arrière 3 et les pattes latérales 4 et 6. On y a également représenté les principales lignes de pliage 2', 3', 4', 6' respectives qui délimitent ces pattes par rapport au fond 5 de la découpe 1.

Sur la figure 1b est illustrée la même découpe 1 sous une forme semi pliée. Telle que représentée, la découpe 1 permet de réaliser une boîte simple, dite "à double parois". On comprendra cependant que le choit de ce type de boîte particulier n'est en aucun cas limitatif pour l'objet de la présente invention.

La figure 2 donne une illustration schématique d'une plieuse-colleuse 10 et de ses modules, en correspondance desquels figure une illustration schématique de certaines opérations pratiquées sur les découpes 1. Le premier module de la plieuse-colleuse, illustrée en exemple dans cette figure, est le margeur 11 qui alimente la machine découpe par découpe à partir d'une pile 12. Ces découpes sont, dans la plieuse-colleuse, convoyées d'un module à l'autre par un transporteur 13 à courroies par exemple.

Le second module de la plieuse-colleuse 10 est le casseur 15 qui a pour but de plier les pattes longitudinales des découpes 1 selon les lignes de pliage 4' et 6' correspondantes. De façon à synchroniser le départ des découpes et à les espacer de manière régulière sur le transporteur 13, un margeur à temps 16 est agencé à l'entrée du casseur 15. Son fonctionnement étant identique ou semblable à celui décrit plus haut, seule son illustration sera mentionnée ici. A la sortie du module se trouve le dispositif de la présente invention

C'est dans ce module que toutes les pattes qui doivent être pliées seront rabattues selon leurs lignes de pliage. Parmi ces opérations, on mentionnera le pliage de ou des pattes arrières 3 effectuées au moyen d'un ou de plusieurs plieurs rotatifs 18 tels que déjà décrits auparavant.

Durant le pliage de la patte arrière 3, il convient de maintenir la découpe 1 par ses pattes latérales 6 afin d'éviter que celles-ci ne s'ouvrent, si elles ont déjà été pliées, et/ou d'empêcher le soulèvement de la découpe par rapport au plan du transporteur 13. Pour ce faire, le maintien des pattes latérales est réalisé au moyen des appuis rotatifs 20, tel que représenté dans l'illustration correspondante vue depuis le dessus dans la figure 2.

Le troisième module illustré est le plieur 17.

Le dernier module illustré dans cette figure est un module de réception 21 dans lequel les boîtes pliées et collées sont disposées en nappe 22. La mise en nappe permet de pouvoir appliquer plus facilement une forte pression sur les boîtes pour les coller, offre un temps de séchage plus long et facilite enfin le ramassage des boîtes à la sortie de la réception.

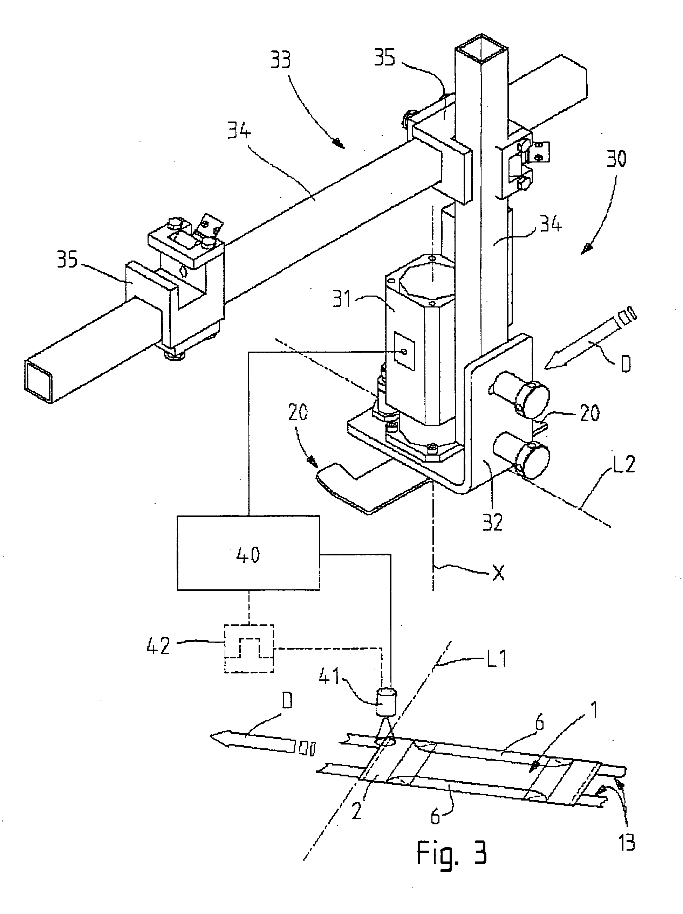

La figure 3 est une vue schématique du dispositif 30 de la présente invention, illustré en perspective. Ce dispositif pour le maintien des pattes latérales 6 comprend un organe d'entraînement 31 permettant la rotation d'au moins un appui rotatif 20. De préférence, ces appuis rotatifs sont agencés directement à l'extrémité de l'arbre principal de l'organe d'entraînement. Ce dernier est fixé verticalement ou en biais, par l'intermédiaire d'un support 32, sur une structure portante 33, réglable dans le sens latéral et longitudinal, ainsi qu'en hauteur par rapport au plan de défilement des découpes dans la machine. Afin de permettre ces réglages, la structure portante 33 comprend une pluralité de potences 34 reliées par des étriers 35 réglables en coulissement le long de ces dernières. Au moyen d'un des étriers 35, la structure portante 33 peut être facilement rendue solidaire de la plieuse-colleuse 10, par exemple en la fixant sur le bâti de cette dernière.

Etant préférentiellement destiné à travailler en synchronisme avec au moins un plieur rotatif 18 pour le rabattement des pattes arrières 3, ce dispositif 30 comprend une unité de commande électronique 40 reliée à au moins un capteur de détection 41 des découpes 1 en défilement. Cette unité de commande électronique pilote l'organe d'entraînement 31 en fonction des signaux générés par le capteur de détection 41. Ce dernier est de préférence constitué d'une cellule optoélectronique permettant de détecter l'instant où le bord frontal de la patte avant 2 d'une découpe franchit une ligne de position L1 imaginaire déterminée par la position du capteur 41 au sein de la plieuse-colleuse.

En fonction de la vitesse de défilement de cette découpe et de la distance connue séparant ladite ligne de position L1 d'une seconde ligne de position L2, passant par la verticale de l'axe de rotation X de l'organe d'entraînement 31, l'unité de commande électronique 40 est à même de déterminer le temps nécessaire à la découpe pour parcourir cette distance. Connaissant également la forme et les dimensions des découpes travaillées, ainsi que le nombre d'appuis rotatifs 20 et leur position angulaire instantanée, l'unité de commande électronique est capable de piloter la rotation de l'organe d'entraînement 31 de manière à ce qu'un des appuis rotatifs arrive en bonne position pour maintenir la patte latérale 6 de la découpe au moment du pliage de la patte arrière 3. De la même manière, cette même unité de commande veillera également à ce que les appuis rotatifs se retirent complètement des pattes latérales avant qu'ils ne rentrent en collision avec la patte arrière ou une autre partie de la découpe 1. Pour ce faire, les dimensions géométriques des découpes travaillées seront de préférence introduites et mémorisées sous forme de paramètres dans l'unité de commande lors de la préparation de la plieuse-colleuse.

La vitesse de défilement de la découpe peut être déterminée au moyen d'un second capteur 41, relié à l'unité de commande électronique 40 et disposé en amont de la ligne de position L1 à une distance déterminée. En calculant le temps écoulé entre les émissions des signaux de ces deux capteurs 41, et connaissant la distance les séparant, l'unité de commande 40 peut alors déterminer la vitesse de la découpe 1.

En guise de variante, cette vitesse de défilement pourrait être également déterminée à l'aide d'un organe spécifique, comme qu'un générateur d'impulsions 42, relié à l'entraînement du transporteur 13 de la plieuse-colleuse. Un tel générateur d'impulsions est généralement un organe déjà présent dans la majorité des plieuses-colleuses. Il permet de générer des impulsions selon une fréquence qui est fonction de la vitesse du transporteur 13. Utilisé en corrélation avec le capteur 41, ces deux organes permettent à l'unité de commande 40 de déterminer la vitesse de la découpe, de connaître l'instant où celle-ci franchi la ligne de position L1 et de générer des signaux de commande pour le pilotage de l'organe d'entraînement 31. Cette variante est illustrée en traits interrompus dans la figure 3.

De préférence, l'unité de commande électronique 40 pilotera simultanément deux organes d'entraînement 31, disposés de chaque côté du passage des découpes de manière à ce que chacun de ces dispositifs puisse agir sur les pattes latérales 6 des découpes. Aussi, on précisera que le dispositif 30 n'est pas forcément destiné à être utilisé en association avec un ou plusieurs plieurs rotatifs 18, mais peut être également utile dans toute situation où le maintient des pattes latérales est nécessaire ou serait opportun.

Préférentiellement, l'organe d'entraînement 31 est constitué d'un servomoteur, ou d'un moteur équivalent, permettant une rotation fine, précise et rapide de son arbre de rotation, et par conséquent des appuis rotatifs 20. Grâce à un tel moteur et à une telle unité de commande électronique, l'organe d'entraînement, 31 est avantageusement rendu autonome par rapport aux différents entraînements existants au sein de la machine. Cette indépendance permet au dispositif 30 de pouvoir être agencé n'importe où dans la plieuse-colleuse sans être confronté à un quelconque problème d'entraînement ou de synchronisme des appuis rotatifs. De plus, lorsque des découpes possèdent des pattes latérales 6 distantes de la patte arrière 3 d'une longueur non commune, le dispositif 30 peut dans ce cas être facilement déplacé et ajusté en fonction de la position de ces pattes sur la découpe.

Avantageusement encore, ce dispositif offre la possibilité de pouvoir contrôler la rotation des appuis rotatifs dans le temps en maîtrisant ainsi la synchronisation de ces derniers sans lien mécanique, ni avec l'un des organes d'entraînement de la plieuse-colleuse, ni avec le plieur rotatif 18.

Ce dispositif 30 apporte également une solution pour les plieuses-colleuses équipées de plieurs rotatifs d'une nouvelle génération avec lesquels il n'est plus possible d'y accoupler un dispositif annexe.

Grâce au dispositif de la présente invention, il devient également possible de faire varier le temps d'action des appuis rotatifs sur les pattes latérales. Ainsi, l'unité de commande électronique 40 peut, par exemple, commander volontairement le ralentissement de la vitesse angulaire de l'arbre du dispositif d'entraînement 31, de façon à ce que les pattes latérales soient le plus longtemps possible maintenues par les appuis rotatifs au cours du défilement de la découpe sous le dispositif 30. La courbe représentative du temps de maintient des pattes latérales au cours d'un cycle est ainsi variable et facilement adaptable pour pouvoir obtenir une action optimale. Cette souplesse découle des organes qui composent le dispositif 30 et qui conduisent à la réalisation d'une "came électronique", en référence aux cames mécaniques qui elles n'offrent cependant aucune de ces possibilités supplémentaires.

Avantageusement, grâce à la came électronique du dispositif de la présente invention, ce dernier ne nécessite plus l'utilisation d'un margeur à temps contrairement aux dispositifs de l'art antérieur. Ainsi, tout décalage éventuel à l'introduction dans le positionnement longitudinal de la découpe sur le transporteur, ne pose plus aucun problème lorsqu'il s'agira plus en aval de maintenir les pattes latérales par des appuis rotatifs. Un éventuel glissement longitudinal de la découpe durant son convoyage en amont du plieur, ne pose pas plus de problème.

Avantageusement encore, le dispositif 30 permet d'obtenir des cadences de production plus élevées que celles qu'autorisaient les dispositifs de l'art antérieur. De plus, par rapport à ces derniers, on remarquera que les appuis rotatifs du dispositif de la présente invention sont entraînés en synchronisme par un mécanisme sensiblement simplifié. Aussi, l'indépendance résultant de ce dispositif facilite sa mise en place en machine, de même que son retrait ou son déplacement, et permet de réduire le temps nécessaire à la préparation de la plieuse-colleuse tout en contribuant à la réduction des coûts de production, en particulier lors de petites séries.

## Revendications

1. Dispositif (30) pour le maintien de pattes latérales (6) de découpes (1) de boîtes, défilant sur un transporteur (13) au sein d'une plieuse-colleuse (10), pourvu d'au moins un appui rotatif (20) actionné en synchronisme avec le défilement desdites découpes (1) par un organe d'entraînement (31) agencé sur une structure portante (33), **caractérisé en ce qu'**il comprend au moins un capteur (41), pour la détection des découpes (1), relié à une unité de commande électronique (40) pilotant ledit organe d'entraînement (31), et **en ce que** cet organe d'entraînement est un organe autonome.

2. Dispositif (30) selon la revendication 1, **caractérisé en ce que** ledit organe d'entraînement (31) est constitué d'un servomoteur.

3. Dispositif (30) selon la revendication 1, **caractérisé en ce que** ledit capteur (41) et l'unité de commande (40) sont reliés par un générateur d'impulsions (42) produisant des impulsions en fonction de la vitesse du transporteur (13).

4. Dispositif (30) selon la revendication 1, **caractérisé en ce que** ledit capteur (41) est une cellule optoélectronique.

## Claims

1. Device (30) for holding lateral tabs (6) of box blanks (1), which are running on a conveyor (13) within a folder-gluer (10), equipped with at least one rotary support (20) actuated in synchronism with the running of said blanks (1) by a drive member (31) arranged on a bearing structure (33), **characterized in that** it comprises at least one sensor (41), for the detection of the blanks (1), connected to an electronic control unit (40) controlling said drive member (31), and **in that** the drive member is an autonomous member.

2. Device (30) according to claim 1, **characterized in that** the drive member (31) consists of a servomotor.

3. Device (30) according to claim 1, **characterized in that** the sensor (41) and the control unit (40) are connected by a pulse generator (42) producing pulses according to the speed of the conveyor (13).

4. Device (30) according to claim 1, **characterized in that** the sensor (41) is an optoelectronic cell.

## Patentansprüche

1. Vorrichtung (30) zum Halten von Seitenlaschen (6) von Schachtelzuschnitten (1), die auf einem Förderer (13) in einer Faltschachtel-Klebemaschine (10) durchlaufen, ausgestattet mit mindestens einer Rotationsstütze (20), die in Synchronismus mit dem Durchlauf der besagten Zuschnitte (1) durch ein auf einer tragenden Struktur (33) angeordnetes Antriebsorgan (31) betätigt wird, **dadurch gekennzeichnet, dass** sie mindestens einen Sensor (41) zur Erfassung der Zuschnitte (1) umfasst, der mit einer das besagte Antriebsorgan (31) steuernden eletronischen Steuereinheit (40) verbunden ist, und dass dieses Antriebsorgan ein unabhängiges Organ ist.

2. Vorrichtung (30) gemäss Patentanspruch 1, **dadurch gekennzeichnet, dass** das Antriebsorgan (31) aus einem Servomotor besteht.

3. Vorrichtung (30) gemäss Patentanspruch 1, **dadurch gekennzeichnet, dass** der Sensor (41) und die Steuereinheit (40) durch einen Impulsgenerator (42) verbunden sind, welcher Impulse in Abhängigkeit von der Geschwindigkeit des Förderers (13) produziert.

4. Vorrichtung (30) gemäss Patentanspruch 1, **dadurch gekennzeichnet, dass** der Sensor (41) eine optoelektronische Zelle ist.
